# EUROPEAN PATENT SPECIFICATION

(11) **EP 3 502 938 B1**
(45) Date of publication and mention of the grant of the patent: **20.07.2022**
(21) Application number: 17208760.3
(22) Date of filing: 20.12.2017
(51) Int. Cl.: G06F 21/32

(54) **A CONVERSATIONAL REGISTRATION METHOD FOR CLIENT DEVICES**
KONVERSATIONSREGISTRIERUNGSVERFAHREN FÜR CLIENT-VORRICHTUNGEN
PROCÉDÉ D'ENREGISTREMENT DE CONVERSATION POUR DES DISPOSITIFS CLIENTS

(43) Date of publication of application: 26.06.2019
(73) Proprietor: Deutsche Telekom AG, 53113 Bonn (DE)
(72) Inventor: Wang, Hao, 53175 Bonn (DE)
(74) Representative: Braun-Dullaeus Pannen Emmerling Patent- & Rechtsanwaltspartnerschaft mbB

(56) References cited:
- US-A1- 2013 006 626
- US-A1- 2015 095 028
- US-A1- 2015 187 359

## Description

### TECHNICAL FIELD

This invention relates to a method of conversational registration for client devices, in particular for smart speakers, wherein users can perform a registration process only by using their voice. This method is also suited to perform a login process which typically follows the registration process if the user wants to use the client device at a later point. The invention also relates to a client device that is adapted to realize the method of a conversational registration process.

### BACKGROUND

Many services which are provided to the user by client devices use server-based systems. Those server-based systems are connected to the client device via network channels. Those server-based systems have the advantage of higher computing power, greater memory storage, state-of-the-art software versions/algorithms and easier planned servicing. If one server-based system is regularly updated all client devices which are connected to this server-based system benefit from that.

Typically a manufacturer wants to ensure that only people who actually bought the client device or pay for a special service have access to the services provided by the usage of the server-based systems. In other words: only if a person fulfills certain criteria's, access to the server-based system by using the client device shall be granted. In the following, we will call a person that fulfills all those criteria's a user.

It is known that for this reason the user has to undergo a tedious registration process in order to provide specific data about himself to the manufacturer so that the server-based system can verify the identity of the user and customize his profile and/or his personal settings. This registration process can affect the behavior of the server-based system related to the user.

The user typically provides the specific data by typing it on a keyboard or on a virtual keyboard, e.g. when using a smart phone or tablet. However, there are client device existing that don't feature a keyboard or a virtual keyboard so that manufacturers typically have to provide companion apps that run on the smart phone, wherein those companion apps facilitate the registration process by connecting to the client device through a network and providing a input interface for the client device for entering the user information. Those information's are transferred via the network to the server-based system, which identifies and verifies the information.

Unfavorably, this registration process may confuse the user and lead to extra work for the developers to create the companion apps. This extra work even increases because the developers have to provide the companion apps for all possible combinations of smart phones, tablets and the associated operating systems. The user always has install the companion app on his smart phone or tablet. A further disadvantage is that visually impaired people cannot easily register by those stated means to the server-based services.

US 2013/0006626 A1 shows a method and a system of voice-based logging in to a telecommunications systems, which includes a login process controller; a speech recognition module; a speech synthesis module; and a user database. Responsive to a user provided first verbal answer to a first verbal question, the first verbal answer is converted to text and compared with data previously stored in the user database. The speech synthesis module provides a second question to the user, and responsive to a user provided second answer to the second question, the speaker verification module compares the second verbal answer with the voiceprint of the user previously stored in the user data base and validates that the second verbal answer matches the voiceprint of the user previously stored in the user database. Unfavorably, this method cannot be used to register to a server-based system if no voiceprint of the user is stored in the database. Furthermore, the questions provided by the method are only capable to hinder computer-based attacks to the system but not human-based attacks. Furthermore, no possibility of a voice-based registration process is shown.

US 2015/095028 A1 shows systems and methods for determining an identity of an individual are provided. Audio may be received that includes a key phrase spoken by the individual, and the key phrase may include an identifier spoken by the individual. A key phrase voice print and key phrase text corresponding to the audio may be obtained. The key phrase text may include text corresponding to the identifier spoken by the individual. Voice prints may be retrieved based on the text corresponding to the identifier, and the voice prints may be provided to a voice biometric engine for comparison to the key phrase voice print. The individual may be authenticated based on a comparison of the key phrase voice print to the voice prints. The identifier may include a first name and a last name of the individual.

Hence, it is the task of the invention to disclose a voice-based registration method which identifies and verifies a user by conversational means.

This task is solved by the independent claims.

### SUMMARY OF THE INVENTION

According to an aspect of the invention there is provided a method of a user registration process into a server-based system using a client device compromising the following steps:
initializing a registration process on the client device;
providing a first verbal user input to the registration process, wherein the first verbal input is recorded by a microphone of the client device and sent to the server-based system;
assigning the first verbal user input to a user specific dataset located on the server-based system;
generating a first security question by the server-based system, wherein the first security question is a random question generated by a random question generator based on the user specific dataset;
asking the first security question to the user by means of a speaker of the client device,
recording an answer by the microphone as a second verbal user input and sending the answer to the server-based system;
verifying the identity of the user by the registration process on basis of the answer.

The client device could be a smart speaker device which features a microphone so that it can for example listen to what the user is saying while playing music. But the client device is not limited to such a smart speaker but shall cover all devices available on the market having a microphone and an interface to network connection. The initializing of the registration process could be done automatically when the device is connected to power for the first time or could be triggered by the user by pressing a button or saying a specific keyword like "start the initializing process" or "Hello, I'm Hao Wang".

The latter sentence could be the first verbal user input and provided to the registration process. This sentence exhibits at least two different pieces of information, namely the name of the user and his voiceprint. Since the microphone of the client device is preferably always online, it is possible to record these words and sent them to the server-based system. This can be facilitated a via a network connection between the server-based system and the client device. Those two pieces of information can be used to assign the first verbal user input to the user specific dataset located on the server-based system. For example the server-based system can check if there is a dataset that is tagged with the name "Hao Wang" and/or if the voiceprint matches with voiceprint starts in the dataset. Of course the user could also provide the information where he is living or when he was born so that those pieces of information are even more unique - this could be especially sensible if no voiceprint of the user is available in the dataset.

Especially, if no voiceprint of the user is available it is important to verify the identity of the user by asking security questions to which only the user knows the appropriate knows the answer. Hence, the first security question is a random question generated by a random question generator which uses information of the user specific dataset. A speech synthesis module could generate and provide the audio signals of the random question which is asked to the user by the speaker of the client device.

The corresponding answer of the user is recorded by the microphone and sent to the server-based system that verifies the identity of the user on basis of this answer. The information about the user, which is available in the user specific dataset, could be used to automatically create a specific user profile concerning the client device and to finish the registration process. This method is not limited to a registration process but can also be used to simply login to the server-based and the corresponding services. Favorably, no companion app is needed if the user wants to use the server-based services of the client device, for example but not limited to a smart speaker device like "Google Home" or "Amazon Echo".

The user specific dataset is automatically created due to user input related to the server-based system. It is possible, that a manufacturer that runs the server-based system offers a wide variety of services that can catch information of the user and additionally create a user specific dataset. For example, Amazon runs an online shopping store where the user registers with personal data when he buys something by typing his name, address, birthday or the like. This online shopping store can be connected to the server-based system or even runs on the server-based system, so that the personal data of the user may be used to automatically create the user specific dataset.

Advantageously, the random question generator generates a return-text that solves the random question. Since the random question shall not simply be a question that is randomly chosen from a predefined list with predefined answers, it is useful that one or more return-texts are created that solve or match the random question. More than one return-text might be needed, because random questions tend to be more complex than predefined questions maybe yielding in more than one possible answer. If more than one return-text is generated, it is possible to define that one return-text solves the random question better than another return-text.

The random question, which is generated by the random question generator, may be a dynamic context-aware question. This basically means, that every time the random question generator is triggered, it can extract different information from the user specific dataset to generate the random question, whereby this question is based on context information of the dataset which the user, but no third party, likely remembers.

In an embodiment the answer of the user is transformed to text-form by a speech recognition algorithm and compared to the return-text, wherein a matching probability is calculated. It is possible that the speech recognition algorithm runs on the server-based system. This feature enables that the answer can be easily compared to the return-text by an appropriate algorithm.

The access to the server-based system may be granted to the user if the matching probability is sufficiently high. The idea behind this feature is that it might be not possible to give an answer that perfectly matches the random question. This might happen if the user does not perfectly remember the context on which basis the random question is generated. Nevertheless, this feature makes it possible that access is granted to the user if the matching probability is higher than certain threshold - e.g. when he only remembers partially.

In one embodiment the random question generator generates further questions if the matching probability is too low. It follows, that the registration process needs not to be stopped if the first verification process fails but can continue, which is more convenient to the user than starting initializing process again from scratch.

In another embodiment, it is possible, that the voiceprint is already existing in the dataset. The voiceprint could be recorded at times when the user did use another service of the manufacturer that runs the server-based system. This enables that the user can be identified and assigned to the user specific data set by evaluating the user's name or voiceprint.

According to another aspect of the invention there is provided a client device comprising:
an interface to a network, in particular to the internet, in order to exchange data with a server-based system;
a speaker in order to generate audio signals to a user;
a microphone in order to record verbal user input;
a processor to run and control the processes of the client device, wherein the client device is adapted to realize a method according to one of the preceding claims.

The network can be a mobile network or a cable-based network or a combination of both as long as it is possible that via the network data can be exchanged with the server-based system. Those processes are controlled by a processor which is a part of the client device. If the client device is a smart speaker, the speaker can serve two purposes, namely playing music and doing the conversational talk with the user, whereas the microphone is used to record what the user is saying. As mentioned before, the client device is not limited to a smart speaker but it is also possible that the client device could be a car, a smart TV or other parts of a smart home system - like a refrigerator.

Within the scope of this application it is expressly intended that the various aspects, embodiments, examples and alternatives set out in the preceding paragraphs, in the claims and/or in the following description and drawings, and in particular the individual features thereof, may be taken independently or in any combination. Features described in connection with one embodiment are applicable to all embodiments, unless such features are incompatible.

### BRIEF DESCRIPTION OF THE DRAWING

One or more exemplary embodiments of the invention will now be described with reference to embodiments shown in the accompanying drawings, in which:

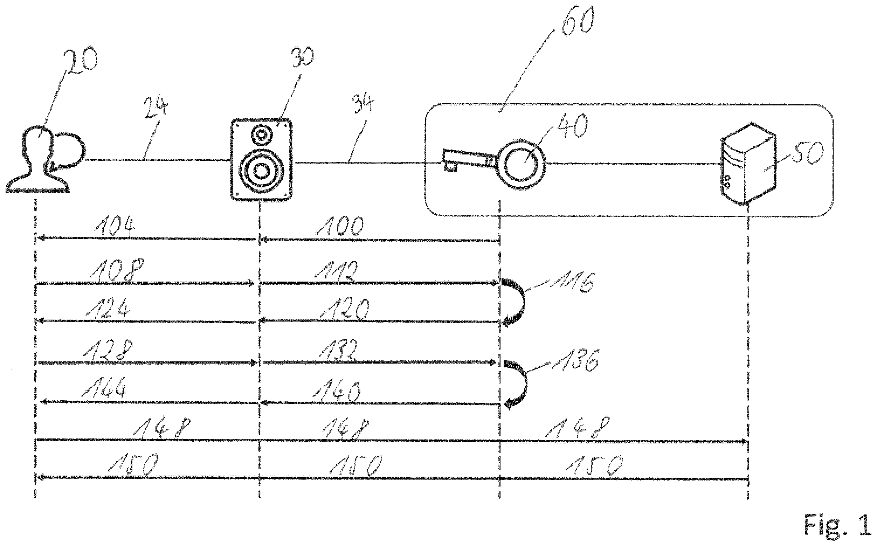

Fig. 1 shows the inventive method of a voice-only registration process of a user via a client-device.

### DETAILED DESCRIPTION

Fig. 1 shows the inventive method of a voice-only registration of the user 20 via a client device 30. In Fig. 1 the client device 30 is being represented by a smart speaker 30. The invention enables the user to authenticate himself to the smart speaker 30 by doing a conversational dialogue with the smart speaker 30. This conversational dialogue 24 is technically realized through audio signals 24 which are exchanged between the user 20 and the smart speaker 30. The smart speaker 30 records the dialogue 24 by means of an inbuilt microphone.

The recorded audio signals 24 are transferred to a login service 40 via the Internet 34, whereas this can be realized in a wire or wireless way. The login service 40 is in connection with a voice service 50. Both the login service 40 and the voice service 50 can run on a server-based system 60 and e.g. be connected by an internal bus connection 44. In principle the login service 40 and the voice service 50 serve different tasks. The login service 40 facilitates the user identification and verification, whereas the voice service 50 provides services like telling the user 20 the weather, playing his favorite music, making appointments for the user 20 or the like. Preferably, a kind of artificial intelligence runs on the login service 40 that is able to preparing random questions on the fly or validating the user's voice during the conversation. This artificial intelligence may by labeled as a random question generator. The login service 40 comprises the random question generator.

The steps that will be described in the following are labeled by the corresponding numbers in Fig. 1.

Step 100: When starting the initializing process, the artificial intelligence of the login service 40 can prepare some initial starting questions in an appropriate digital form so that the smart speaker 30 can produce an audio signal that can be understood by the user 20. This can be done by a speech synthesis module. The initial starting questions are then transferred to the smart speaker 30.

Step 104: The smart speaker 30 asks the initial starting questions to the user 20. One possible initial starting question could be: "Can you tell me you name or your username, respectively. Can you tell me also where are you living or when you're born?"

Step 108: The user 20 gives a first answer to the initial starting questions which is recorded by the microphone of the smart speaker 30.

Step 112: A processor of the smart speaker 30, which controls the behavior of the smart speaker 30, forwards the first answer to the login service 40.

Step 116: The login service 40 identifies the user 20 by comparing the information provided in the first answer with different datasets of various users and choosing the one dataset which is best matching with the first answer. This could also include identifying the voiceprint of the user if counterpart of the voiceprint is available in the dataset. In the following the chosen dataset is called the user specific dataset. On the basis of this user specific dataset the login service 40 generates one or more security questions. These security questions could be predefined starting questions like i) "please tell me your Username and Password" ii) "what is your mom's birthday?" or the login service 40 generates on the fly dynamic context-aware questions like iii) "what was your last buy on Amazon?"

Step 120: The security question is transferred to the smart speaker 30. Step 124: The smart speaker 30 asks the security question to the user 20. Step 128: The user 20 speaks a second answer to the smart speaker 30, which transfers the second answer to the login service 40 in step 132.

Step 136: The login service 40 verifies the second answer by comparing it to an expected answer - possibly by additionally checking the user's voice print. If the verification process is successful, the underlying algorithm crosses a certain threshold for the probability that the chosen user specific dataset corresponds to the user 30. In this case the login service 40 returns a token that grants the user 30 access to the voice services 50. If the verification process is not successful, the login service 40 can generate further random security questions in a loop-like-fashion. After a predefined number of fails, the login process can automatically stopped. Optionally, the login service 40 can also choose different combinations of the above questions. It is possible that successful verification is determined only if all questions are correctly answered or if a certain fraction of questions is correctly answered.

Step 140: The token is transferred to the smart speaker 30 and saved within the internal memory of the smart speaker 30, so that the user 20 has permanent access to the voice service 50. The smart speaker 30 uses the token for the communication with the voice service 50. The smart speaker 30 tells the user in step 144 that the registration process or the login process is successfully finished.

Step 144: The user 20 asks the smart speaker 30 about the weather forecast for tomorrow, in doing so the smart speaker 30 transfers this question directly to the voice service 50 which returns in step 150 the answer to the smart speaker 30, which tells the user the weather will be sunny tomorrow.

The following three examples A), B) and C) show possible conversational registration dialogues within the scope of the invention:
A)
   Login Service 40: "Welcome, please tell me your name to log in."
   User 20: "My name is Hao Wang."
   The artificial intelligence of the Login Service 40 knows the location and gets all users with the name in that region.
   Login Service 40: "What did you buy last week?"
   User 20: "A ski jacket."
   Login Service 40: "Can you tell me more details about your jacket?"
   User 20: "It is white, middle size."
   Login Service 40: "And what was the prize?"
   User 20: "About 200 €."
   Login Service 40: "Did you buy it using your phone or notebook?"
   User 20: "I think, I used my phone."
   Login Service 40: "Congrats! You are registered und logged in! Enjoy the product."
B) The user 20 wants e.g. login to Amazon Echo. Amazon can easily generate a user specific dataset containing information about all shopping deals the user 20 did on Amazon. Therefore, the question of the login service 40 could be:
   a. What did you buy last Christmas for your kid?
   b. When was your last shopping? And what did you buy? If the user does not remember that he bought a ski jacket, the login service 40 can give some hints like: It was something that is useful in winter.
   c. Based on b., certain details about the jacket are asked, e.g. what is the color, size, and price.
   d. If the user cannot remember, he gets some hints to sort it out it was a ski jacket.
   The questions can continue until the login service 40 decides whether access is granted or not.
C) The user 20 wants e.g. login to Google Home. By having a google profile (emails, maps, photos, search...) or by searching and browsing the internet using Google Chrome, a user specific dataset can be created by Google. Therefore, the context-aware random question of the login service 40 could be:
   a. What is your work place?
   b. When is your last travel? To where and for how long?
   c. What mobile device do you use to take the last photo?

The questions can continue until the login service 40 decides whether access is granted or not.

The user 20 does not have to answer all questions exactly right as he may forget or confuse something. The login service 40 should be able to tolerant a certain level of deviation and can adapt the following questions.

## Claims

1. A method of a user registration process into a server-based system using a client device comprising the following steps:
initializing a registration process on the client device (30);
providing a first verbal user input to the registration process, wherein the first verbal input is recorded by a microphone of the client device (30) and sent to the server-based system (60);
assigning the first verbal user input to a user specific dataset located on the server-based system (60);
generating a first security question (120) by the server-based system (60);
asking (124) the first security question to the user (20) by means of a speaker of the client device (30),
recording (128) an answer by the microphone as a second verbal user input and sending (132) the answer to the server-based system (60);
verifying (136) the identity of the user by the server-based system (60) on basis of the answer in a verification process,
wherein the first security question is a random question generated by a random question generator based on the user specific dataset,
the user specific dataset is automatically created due to user input related to the server-based system (60),
**characterised in that**
if the verification process is successful a login service (40) returns a token that grants the user access to a voice service (50),
wherein the token is transferred to the client device (30) and saved within the internal memory of the client device (30), so that the user (20) has permanent access to the voice service (50).

2. A method according to any one of the claims 1, **characterised in that** the random question generator generates a return-text that solves the random question.

3. A method according to any one of the claims 1 to 2, **characterised in that** the random question is a dynamic context-aware question.

4. A method according to any one of the claims 2 to 3, **characterised in that** the answer is transformed to text-form by a speech recognition algorithm and compared to the return-text, wherein a matching probability is calculated.

5. A method according to claim 4, **characterised in that** access to the server-based system (60) is granted if the matching probability is sufficiently high.

6. A method according to claim 4, **characterised in that** the random question generator generates further questions if the matching probability is too low.

7. A method according to any one of the claims 1 to 6, **characterised in that** a voiceprint is existing in the dataset.

8. A method according to claim 7, **characterised in that** the user is identified and assigned to the user specific dataset by evaluating the user's name or voiceprint.

9. A client device comprising:
an interface to a network (34), in particular to the internet, in order to exchange data with a server-based system (60);
a speaker in order to generate audio signals to a user (20);
a microphone in order to record verbal user input;
a processor to run and control the processes of the client device (30), wherein the client device (30) is adapted to realize a method according to one of the preceding claims.

## Patentansprüche

1. Verfahren eines Registrierungsprozesses eines Benutzers in ein serverbasiertes System unter Verwendung einer Client-Vorrichtung, das die folgenden Schritte umfasst:
Initialisieren eines Registrierungsprozesses auf der Client-Vorrichtung (30);
Bereitstellen einer ersten verbalen Benutzereingabe für den Registrierungsprozess, wobei die erste verbale Eingabe durch ein Mikrofon der Client-Vorrichtung (30) aufgezeichnet und an das serverbasierte System (60) gesendet wird;
Zuweisen der ersten verbalen Benutzereingabe zu einem benutzerspezifischen Datensatz, der sich auf dem serverbasierten System (60) befindet;
Erzeugen einer ersten Sicherheitsfrage (120) durch das serverbasierte System (60);
Stellen (124) der ersten Sicherheitsfrage an den Benutzer (20) mittels eines Lautsprechers der Client-Vorrichtung (30),
Aufzeichnen (128) einer Antwort durch das Mikrofon als eine zweite verbale Benutzereingabe und Senden (132) der Antwort an das serverbasierte System (60);
Verifizieren (136) der Identität des Benutzers durch das serverbasierte System (60) auf Basis der Antwort in einem Verifizierungsprozess,
wobei die erste Sicherheitsfrage eine zufällige Frage ist, die durch einen Zufallsfragengenerator auf Basis des benutzerspezifischen Datensatzes erzeugt wird,
der benutzerspezifische Datensatz aufgrund einer Benutzereingabe im Zusammenhang mit dem serverbasierten System (60) automatisch erzeugt wird,
**dadurch gekennzeichnet, dass**
wenn der Verifizierungsprozess erfolgreich ist, ein Anmeldedienst (40) ein Token zurückgibt, das dem Benutzer Zugriff auf einen Sprachdienst (50) gewährt,
wobei das Token an die Client-Vorrichtung (30) übertragen und innerhalb des internen Speichers der Client-Vorrichtung (30) gespeichert wird, so dass der Benutzer (20) permanenten Zugriff auf den Sprachdienst (50) hat.

2. Verfahren nach einem der Ansprüche 1, **dadurch gekennzeichnet, dass** der Zufallsfragengenerator einen Rückgabetext erzeugt, der die zufällige Frage löst.

3. Verfahren nach einem der Ansprüche 1 bis 2, **dadurch gekennzeichnet, dass** die zufällige Frage eine dynamische kontextsensitive Frage ist.

4. Verfahren nach einem der Ansprüche 2 bis 3, **dadurch gekennzeichnet, dass** die Antwort durch einen Spracherkennungsalgorithmus in Textform umgewandelt und mit dem Rückgabetext verglichen wird, wobei eine Übereinstimmungswahrscheinlichkeit berechnet wird.

5. Verfahren nach Anspruch 4, **dadurch gekennzeichnet, dass** Zugriff auf das serverbasierte System (60) gewährt wird, wenn die Übereinstimmungswahrscheinlichkeit ausreichend hoch ist.

6. Verfahren nach Anspruch 4, **dadurch gekennzeichnet, dass** der Zufallsfragengenerator weitere Fragen erzeugt, wenn die Übereinstimmungswahrscheinlichkeit zu niedrig ist.

7. Verfahren nach einem der Ansprüche 1 bis 6, **dadurch gekennzeichnet, dass** in dem Datensatz ein Sonogramm existiert.

8. Verfahren nach Anspruch 7, **dadurch gekennzeichnet, dass** der Benutzer identifiziert und dem benutzerspezifischen Datensatz zugewiesen wird, indem der Name oder das Sonogramm des Benutzers ausgewertet wird.

9. Client-Vorrichtung, die umfasst:
eine Schnittstelle zu einem Netzwerk (34), insbesondere zum Internet, um Daten mit einem serverbasierten System (60) auszutauschen;
einen Lautsprecher, um Audiosignale an einen Benutzer (20) zu erzeugen;
ein Mikrofon, um eine verbale Benutzereingabe aufzuzeichnen;
einen Prozessor, um die Prozesse der Client-Vorrichtung (30) auszuführen und zu steuern, wobei die Client-Vorrichtung (30) dazu angepasst ist, ein Verfahren nach einem der vorhergehenden Ansprüche zu realisieren.

## Revendications

1. Procédé d'un processus d'enregistrement d'utilisateur dans un système basé sur un serveur utilisant un dispositif client comprenant les étapes suivantes consistant à :
initialiser un processus d'enregistrement sur le dispositif client (30) ;
fournir une première entrée verbale d'utilisateur au processus d'enregistrement, dans lequel la première entrée verbale est enregistrée par un microphone du dispositif client (30) et envoyée au système basé sur serveur (60) ;
affecter la première entrée verbale de l'utilisateur à un ensemble de données spécifique à l'utilisateur situé sur le système basé sur serveur (60) ;
générer une première question de sécurité (120) par le système basé sur un serveur (60);
poser (124) la première question de sécurité à l'utilisateur (20) au moyen d'un haut-parleur du dispositif client (30) ;
enregistrer (128) une réponse par le microphone en tant que seconde entrée verbale de l'utilisateur et
envoyer (132) la réponse au système basé sur serveur (60) ;
vérifier (136) l'identité de l'utilisateur par le système basé sur un serveur (60) sur la base de la réponse dans un processus de vérification,
dans lequel la première question de sécurité est une question aléatoire générée par un générateur de questions aléatoires sur la base de l'ensemble de données spécifique à l'utilisateur,
l'ensemble de données spécifique à l'utilisateur est automatiquement créé en raison de l'entrée d'utilisateur liée au système basé sur un serveur (60) ,
**caractérisé en ce que**
si le processus de vérification réussit, un service de connexion (40) renvoie un jeton qui accorde à l'utilisateur l'accès à un service vocal (50), dans lequel le jeton est transféré au dispositif client (30) et enregistré dans la mémoire interne du dispositif client (30), de sorte que l'utilisateur (20) ait un accès permanent au service vocal (50).

2. Procédé selon une quelconque des revendications 1, **caractérisé en ce que** le générateur de question aléatoire génère un texte de retour qui résout la question aléatoire.

3. Procédé selon une quelconque des revendications 1 à 2, **caractérisé en ce que** la question aléatoire est une question contextuelle dynamique.

4. Procédé selon une quelconque des revendications 2 à 3, **caractérisé en ce que** la réponse est transformée sous forme de texte par un algorithme de reconnaissance vocale et comparée au texte de retour, dans lequel une probabilité de correspondance est calculée.

5. Procédé selon la revendication 4, **caractérisé en ce que** l'accès au système serveur (60) est accordé si la probabilité de correspondance est suffisamment élevée.

6. Procédé selon la revendication 4, **caractérisé en ce que** le générateur de questions aléatoires génère d'autres questions si la probabilité de correspondance est trop faible.

7. Procédé selon une quelconque des revendications 1 à 6, **caractérisé en ce qu'**une empreinte vocale existe dans l'ensemble de données.

8. Procédé selon la revendication 7, **caractérisé en ce que** l'utilisateur est identifié et attribué à l'ensemble de données spécifique à l'utilisateur en évaluant le nom ou l'empreinte vocale de l'utilisateur.

9. Dispositif client comprenant :
une interface vers un réseau (34), notamment vers l'internet, afin d'échanger des données avec un système basé sur serveur (60);
un haut-parleur afin de générer des signaux audio pour un utilisateur (20) ;
un microphone pour enregistrer l'entrée verbale de l'utilisateur ;
un processeur pour exécuter et commander les processus du dispositif client (30), dans lequel le dispositif client (30) est adapté pour mettre en œuvre un procédé selon une des revendications précédentes.
